(19) Europäisches Patentamt
European Patent Office
Office européen des brevets

(11) EP 3 307 085 B1

# (12) EUROPEAN PATENT SPECIFICATION

(45) Date of publication and mention of the grant of the patent:
**18.12.2019 Bulletin 2019/51**

(21) Application number: **16731061.4**

(22) Date of filing: **10.06.2016**

(51) Int Cl.:
***A23L 5/44*** *(2016.01)*
***A23L 5/43*** *(2016.01)*
***A23G 1/48*** *(2006.01)*
***A23G 1/54*** *(2006.01)*
***A23G 3/34*** *(2006.01)*
***A23G 3/54*** *(2006.01)*
***A23P 20/10*** *(2016.01)*
***A23P 20/20*** *(2016.01)*
***A23G 3/48*** *(2006.01)*

(86) International application number:
**PCT/EP2016/063249**

(87) International publication number:
**WO 2016/198569 (15.12.2016 Gazette 2016/50)**

## (54) NEW ORANGE COLOR FOR EDIBLE COATINGS

NEUE ORANGEFARBENE FARBE FÜR ESSBARE BESCHICHTUNGEN

NOUVELLE COULEUR ORANGE POUR ENROBAGES COMESTIBLES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.06.2015 CH 8482015**

(43) Date of publication of application:
**18.04.2018 Bulletin 2018/16**

(73) Proprietor: **DSM IP Assets B.V.**
**6411 TE Heerlen (NL)**

(72) Inventors:
- **BECK, Markus**
**4303 Kaiseraugst (CH)**
- **HITZFELD, Andrea**
**4303 Kaiseraugst (CH)**

(74) Representative: **Steck, Melanie**
**DSM Nutritional Products Ltd**
**Patent Department**
**Wurmisweg 576**
**4303 Kaiseraugst (CH)**

(56) References cited:
**EP-A1- 0 455 598**
**EP-A1- 1 250 853**
**WO-A1-2006/066389**
**WO-A1-2009/135100**
**WO-A1-2015/044213**
**GB-A- 2 175 002**
**US-A1- 2010 069 510**
**US-A1- 2011 293 795**
**US-A1- 2012 259 023**
**US-A1- 2013 089 644**
**US-B1- 6 500 473**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 307 085 B1

## Description

The present invention is directed to edible coatings comprising a mixture of bixin and beta-carotene ("β-carotene"), wherein the edible coatings have an orange color which are e.g. used for confectionaries such as in particular chocolate products. The present invention is further directed to the precursors of such edible coatings, i.e. the sugar syrup or the sugar-free syrup, as well as to panned confection and a process for its manufacture.

There is increasing interest in the food industry to replace artificial materials for coloration of foods such as azo dyes and the like with natural or nature identical colorants. Especially wanted are colors that are also animal-free, allergene-free, GMO-free and kosher/halal.

A challenge in replacing artificial colorants with natural colorants in the coating of hard panned confections has been in obtaining the stability of color characteristics provided by artificial colorants and to match the color of the product the consumer is already used to. Thus, it is important that a consistent visual quality of the product is guaranteed. WO 2006066389 and US 6500473 disclose coloured coatings and syrups with bixin.

A mixture of bixin and beta-carotene can be used to impart an orange color to edible coatings. Surprisingly this color is stable since for the first time a stable bixin form has been provided by the present invention. Edible coatings usually have a pH in the range of from 5-8. Thus, it is advantageous that bixin is now provided in a form which allows a stability over this broad pH range. Furthermore the bixin form according to the present invention shows high color strength and color saturation. It provides in water a E1/1 value of at least 400, preferably a E1/1 value in the range of from 500 to 1800.

Until now bixin has been described as unstable compared to its derivative norbixin, which can be obtained from bixin by demethylation (see e.g. GB 1,049,539: page 2, left column, line 40-43) or via a different extraction route of annatto seeds using alkaline pH conditions which causes the deesterification of the naturally occuring bixin. When bixin is unstable, the color fades away. A change in color in a consumer's end-product is, however, irritating for the consumer since it is linked in the personal subjective perception as a sign of bad quality. A further challenge is that bixin - in contrast to norbixin - is not water-soluble as such.

The annatto based formulations in the preferred embodiment of the current invention are forms of the natural bixin fraction of annatto.

Bixin is especially valuable since it is considered as "natural colorant" according to the NATCOL classification of food colorants. Norbixin, however, is considered only as "nature derived colorant" according to the NATCOL classification of food colorants.

Whereas norbixin gives a bright yellow color shade to foods and edible coatings the bixin forms of the present invention impart strong and bright yellow-orange to red-orange color shades.

Further advantages of the bixin forms according to the present invention are that these bixin forms give a blend a neutral taste and can be added even at high concentrations without negative impact on the taste profile of the final consumer product. Due to that they can also be used to replace paprika based colors which are often associated with a characteristic off-taste.

Furthermore, the bixin formulations in the preferred embodiment of the current invention are fully plant based, vegetarian products that offer a lot of advantages in that respect vs. animal based non-kosher carmine/cochineal based forms that are also used to give orange-reddish shades in the confectionery segment. The bixin forms of the present invention may also be used in place of nature-identical carotenoids such as apocarotenal or canthaxanthin of which both are also associated to orange-reddish colour shades as well.

The present invention is directed to an edible coating comprising a mixture of bixin and beta-carotene. For this mixture a bixin form is used, wherein the bixin is microencapsulated in a matrix of a hydrocolloid. The average particle size of the inner phase of such microencapsulated bixin, when measured in water by Photon Correlation Spectroscopy (Beckman Coulter N4 Plus Submicron Particle Sizer) is preferably in the range of from 100 to 400 nm.

Edible coatings comprising a mixture of bixin and beta-carotene show an orange color. The color shade h of the edible coating of the present invention is preferably in the range of from 45 to 55 at the CIELAB Color scale. Preferably the color value b* of the edible coating is preferably in the range of from 40 to 50 at the CIELAB Color scale.

In an embodiment of the present invention the bixin and the β-carotene are the only colorants used in the edible coating.

The bixin is added as the bixin form together with a β-carotene form to the edible coating according to the present invention. This bixin form is described in more detail below.

The β-carotene may be added in a water-soluble or water-dispersible form. Such a form or also called "formulation" contains the β-carotene embedded or (micro)encapsulated in a matrix of a protective colloid such as e.g. modified food starch. By such (micro)encapsulation the β-carotene is protected from oxidation and degradation. Examples of such formulations are the forms "β-carotene 10% CWS/S" and "β-carotene 3% CWS/M" commercially available from DSM Nutritional Products AG.

Amount of β-carotene in the edible coating

Preferably the amount of β-carotene in the edible coating is in the range of from 1 ppm to 100 ppm, based on the total weight of the edible coating.
The orange edible coatings according to the present invention can be applied to any desired edible product center.

**Edible product center**

The edible product centers may be classified as follows: soft, hard, filled, extruded and compressed edible product centers.
Examples of soft edible product centers are deposited products based on Gum Arabic, gelatin, agar agar and/or pectin; toffee mass; deposited foam and fondant.
Examples of hard edible product centers are hard boiled candy, all types of nuts (e.g. almonds, peanuts, hazelnuts) and recrystallized candy mass.
Examples of filled edible product centers are crusted liquid filling (coffee beans, easter eggs), soft candy with powder filling and soft candy with semi liquid filling.
Examples of extruded edible product centers are expanded cereals, original liquorice and fruit liquorice.
Examples of compressed edible product centers are all type of mint and fruit tablets, as well as drug delivery systems.
The edible product center may also be characterized according to the material it is made of. Therefore, in some embodiments, the edible product center may comprise a natural center, e.g., a nut (e.g. almonds, peanuts, hazelnuts), a nut paste, a fruit (e.g. a date), a dried fruit (e.g. dried apricots or raisins) or dried fruit pieces, or dried fruit paste, or spices (e.g. coriander, ginger, anisette seeds). The edible product center may also be sugar crystals.
Or, the edible product center may comprise a confection, e.g., a boiled sugar syrup, caramel, nougat, toffee, marshmellows, fudge, chocolate, or combinations of these.
Alternatively, the edible product center may comprise a grain-based item such as cereals (e.g. oat, wheat, corn, rice), especially e.g. a grain-based item in form of a cookie, pretzel, biscuit, wafer, cracker, or other baked, crisped, or puffed material.
The edible product center may also be a tablet or a chewing gum. Examples of a tablet are a pharmaceutical or a (multi)vitamin tablet or a (multi)mineral tablet or a mixture thereof. The chewing gum can be in the form of balls, pillows or compressed tablets.
The present invention also encompasses edible product centers with any combination of preferred features of the edible product centers as disclosed above though not explicitly mentioned.

**Bixin**

cis-Bixin (compound of formula below; 9-*cis*-6,6'-diapo-ψ,ψ-carotenedioic acid, 6-methyl ester; 6-methyl hydrogen (9'Z)-6,6'-diapocarotene-6,6'-dioate) can be obtained from a natural source, by fermentation or by chemical synthesis. A natural source might be the seeds of *Bixa orellana* L. Such Annatto Seed Extract is commercially available as "cake" and contains at least 50 weight-%, preferably at least 70 weight-%, more preferably at least 85 weight-% of bixin. Chemical syntheses of bixin or its pre-cursors and derivatives are e.g. described in GB 768,172, GB 756,896, GB 751,573 and GB 744,890.

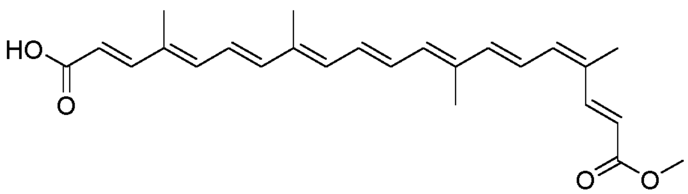

The term "bixin" used herein encompasses the (all-E)-isomer as well as mono-, oligo- or poly-(Z)-isomers. A preferred isomer mixture consists especially essentially of cis-bixin.

Amount of bixin in the edible coating

Preferably the amount of bixin in the edible coating is in the range of from 1 ppm to 70 ppm, more preferably

it is in the range of from 10 ppm to 60 ppm, based on the total weight of the edible coating.

Bixin form

"Bixin form" is a synonym for "bixin formulation". In the context of the present invention it means that the bixin is encapsulated, i.e. embedded, in a matrix of a hydrocolloid, especially in a matrix of modified food starch. Preferably the bixin has the average particle size as given above. In such forms the bixin is protected from degradation and oxidation.

The bixin form may be liquid (a dispersion) or solid (a powder). Its manufacturing process is described in more detail below.

The dispersion can be an emulsion or a suspension. When the bixin form is a dispersion (preferably an emulsion), its water content is preferably in the range of from 45 to 65 weight-%. When the bixin form is a powder, its water content is preferably in the range of from 3 to 7 weight-%.

The powder may be manufactured by drying the dispersion (preferably the emulsion) by any method known to the person skilled in the art, e.g. by spray-drying, spray-drying in combination with fluidised bed granulation or by a powder-catch technique, whereby the sprayed dispersion droplets are caught in a bed of an absorbent, such as starch (e.g. corn starch), and subsequently dried. When the powder-catch technique is applied and corn starch is used as absorbent, its amount in the bixin form is preferably in the range of from 10 to 40 weight-%, more preferably in the range of from 25 to 35 weight-%, based on the total weight of the bixin form.

The amount of the bixin in the form is usually in the range of from 1 to 20 weight-%, preferably in the range of from 2.5 to 15 weight-%, more preferably in the range of from 5 to 10 weight-%, based on the total weight of the form.

The average particle size of the inner phase of the bixin form when measured in water by Photon Correlation Spectroscopy (Beckman Coulter N4 Plus Submicron Particle Sizer) is preferably in the range of from 100 to 400 nm.

In a preferred embodiment of the present invention the bixin is preferably encapsulated, i.e. embedded, in a matrix of at least one modified food starch. The modified food starch (esp. OSA starch) and mixtures thereof are described in more detail below.

The amount of the modified food starch in the form is usually in the range of from 35 to 55 weight-%, preferably in the range of from 40 to 50 weight-%, more preferably of around 45 weight-%, based on the total weight of the form.

Additionally one or more water- and/or fat-soluble antioxidants may be present, preferably in an amount of from 0.5 to 5 weight-% in total, based on the total amount of the bixin form.

A preferred example of such water-soluble antioxidants is sodium ascorbate. When sodium ascorbate is used, its amount is preferably chosen in such a way so that its final amount in the bixin form is in the range of from 0.1 to 2 weight-%, based on the total weight of the bixin form.

A preferred example of such fat-soluble antioxidants is dl-alpha-tocopherol. When dl-alpha-tocopherol is used, its amount is preferably chosen in such a way so that its final amount in the bixin form is in the range of from 0.1 to 3 weight-% (preferably 0.1 to 2 weight-%), based on the total weight of the bixin form. Alternatively (R,R,R)-alpha-tocopherol may also be used.

Especially preferred is a bixin form, wherein the matrix further comprises at least one saccharide. The saccharides are disclosed in more detail below.

When a saccharide is present, the amount of the saccharide is preferably in the range of from 0.1 to 10 weight-%, more preferably in the range of from 2 to 8 weight-%, even more preferably in the range of from 3 to 7 weight-%, most preferably of around 5 weight-%, based on the total weight of the bixin form.

An additional ingredient that may also be present in the bixin form are middle-chain triglycerides as e.g. commercially available as "Bergabest 60/40" (a mixture of 60% octanoic acid and 40% decanoic acid) (commercially available from Berg + Schmidt, Hamburg, Germany). The term "middle-chain triglycerides" encompasses saturated $C_{6-12}$ fatty acids and their mixtures such as fractionated coconut oil.

When middle-chain triglycerides are present, their amount is preferably in the range of from 0.1 to 10 weight-%, more preferably in the range of from 2 to 8 weight-%, even more preferably in the range of from 3 to 7 weight-%, most preferably of around 5 weight-%, based on the total weight of the bixin form.

The amounts of all ingredients of the bixin form sum up to 100 weight-%.

Preferably no other compounds are present in the bixin form. Such not-being-present compounds are preferably the following ones:

- a chitosan matrix, especially chitosan alginate;
- gelatin;
- lutein;
- pectins such as e.g. beet pectin, chicory pectin, Jerusalem artichoke pectin or other pectin types having a high degree of acetylation, especially those as disclosed in US 6,500,473;
- Gum Acacia, Gum Arabic; also modified as disclosed in WO 2008/110225;

- emulsifiers selected from the group consisting of sorbitan esters, ethoxylated sorbitan esters, sucrose esters, mono-/di-glycerides and mixtures thereof;
- proteinaceous matrices as used in WO 2006/066389, especially soy protein isolate, rice protein concentrate, milk proteins, whey proteins, zein, gluten, and any mixture thereof;
- polysorbates.

This preference applies for all bixin forms of the present invention.

"Saccharide"

The term "a saccharide" encompasses one saccharide or more.

The term "saccharide" in the context of the present invention encompasses mono-, di-, oligo- and polysaccharides, as well as any mixtures thereof.

Examples of monosaccharides are fructose, glucose (= dextrose), mannose, galactose, sorbose, as well as any mixtures thereof.

Preferred monosaccharides are glucose and fructose, as well as any mixture thereof.

The term "glucose" in the context of the present invention does not only mean the pure substance, but also a glucose syrup with a DE $\geq$ 90. This also applies for the other monosaccharides.

The term "dextrose equivalent" (DE) denotes the degree of hydrolysis and is a measure of the amount of reducing sugar calculated as D-glucose based on dry weight; the scale is based on native starch having a DE close to 0 and glucose having a DE of 100.

Examples of disaccharides are saccharose (= sucrose), isomaltose, lactose, maltose and nigerose, as well as any mixture thereof.

An example of an oligosaccharide is maltodextrin.

An example of a polysaccharide is dextrin.

An example of a mixture of mono- and disaccharides is invert sugar (glucose + fructose + saccharose).

Mixtures of mono- and polysaccharides are e.g. commercially available under the tradenames Glucidex IT 47 (from Roquette Frères), Dextrose Monohydrate ST (from Roquette Frères), Sirodex 331 (from Tate & Lyle), Glucamyl F 452 (from Tate & Lyle) and Raftisweet I 50/75/35 (from Lebbe Sugar Specialties).

The most preferred saccharides are glucose (e.g. "dextrose monohydrate 0.5%"), maltodextrin (e.g. "maltodextrin DE 2023 2%") and sucrose.

When glucose such as "dextrose monohydrate 0.5%" is present in the matrix, its amount is preferably chosen in such a way so that its final amount in the bixin form is in the range of from 0 to 1 weight-%, based on the total weight of the bixin form.

When maltodextrin such as "maltodextrin DE 2023 2%" is present in the matrix, its amount is preferably chosen in such a way so that its final amount in the bixin form is in the range of from 0 to 3 weight-%, based on the total weight of the bixin form.

When sucrose is present in the matrix, its amount is preferably chosen in such a way so that its final amount in the bixin form is in the range of from 0 to 4 weight-%, based on the total weight of the bixin form.

"Modified food starch"

A modified food starch is a food starch that has been chemically modified by known methods to have a chemical structure which provides it with a hydrophilic and a lipophilic portion. Preferably the modified food starch has a long hydrocarbon chain as part of its structure (preferably C5-C18).

At least one modified food starch is preferably used to make a formulation of this invention, but it is possible to use a mixture of two or more different modified food starches in one formulation.

Starches are hydrophilic and therefore do not have emulsifying capacities. However, modified food starches are made from starches substituted by known chemical methods with hydrophobic moieties. For example starch may be treated with cyclic dicarboxylic acid anhydrides such as succinic anhydrides, substituted with a hydrocarbon chain (see O. B. Wurzburg (editor), "Modified Starches: Properties and Uses, CRC Press, Inc. Boca Raton, Florida, 1986, and subsequent editions). A particularly preferred modified food starch of this invention has the following formula (I)

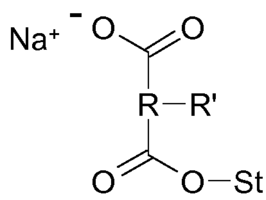

(I)

wherein St is a starch, R is an alkylene radical and R' is a hydrophobic group. Preferably R is a lower alkylene radical such as dimethylene or trimethylene. R' may be an alkyl or alkenyl group, preferably having 5 to 18 carbon atoms. A preferred compound of formula (I) is an "OSA-starch" (starch sodium octenyl succinate). The degree/extent of substitution, i.e. the number of esterified hydroxyl groups to the number of free non-esterified hydroxyl groups usually varies in a range of from 0.1% to 10%, preferably in a range of from 0.5% to 4%, more preferably in a range of from 3% to 4%.

The term "OSA-starch" denotes any starch (from any natural source such as corn, waxy maize, waxy corn, wheat, tapioca and potato or synthesized) that was treated with octenyl succinic anhydride (OSA). The degree/extent of substitution, i.e. the number of hydroxyl groups esterified with OSA to the number of free non-esterified hydroxyl groups usually varies in a range of from 0.1% to 10%, preferably in a range of from 0.5% to 4%, more preferably in a range of from 3% to 4%. OSA-starches are also known under the expression "modified food starch".

The term "OSA-starches" encompasses also such starches that are commercially available e.g. from National Starch/Ingredion under the tradenames HiCap 100, Capsul, Capsul HS, Purity Gum 2000, Clear Gum Co03, UNI-PURE, HYLON VII; from National Starch/Ingredion and Roquette Frères, respectively; from CereStar under the tradename C*EmCap or from Tate & Lyle.

In an embodiment of the present invention a commercially available modified food starch such as e.g. HiCap 100 (from National Starch/Ingredion) and ClearGum Co03 (from Roquette Frères) is used.

## Process for the manufacture of the bixin form according to the present invention

The present invention is also directed to a process for the manufacture of a bixin form as described above comprising the following steps:

a) forming a solution of the bixin in an organic solvent, optionally adding a fat-soluble antioxidant and/or optionally adding middle-chain triglycerides ("MCT");
b) providing a matrix of modified food starch and optionally a saccharide and/or a water-soluble antioxidant in water;
c) emulsifying the solution obtained in step a) into the matrix obtained in step b) to obtain a dispersion, preferably an emulsion;
d) removing the organic solvent from the dispersion (preferably the emulsion) obtained in step c) to obtain a bixin dispersion (preferably a bixin emulsion);
e) optionally drying the bixin dispersion (preferably the bixin emulsion) to obtain a bixin powder.

When steps a), b), c) and d) are performed, the bixin form obtained is a bixin dispersion (preferably a bixin emulsion). When steps a), b), c), d) and e) are performed, the bixin form obtained is a bixin powder.

The steps are now described in detail below.

Step a)

The amounts of the bixin, the fat-soluble antioxidant and the MCT are chosen so that the final amounts of these compounds in the resulting form after having performed all steps is as described above.

The amount of the solvent and the dissolution temperature are chosen so as to dissolve the bixin, the fat-soluble antioxidant, if present, and the MCT, if present, completely. Usually it is necessary to heat up the suspension obtained when mixing all compounds present in this step to get a solution. Preferably the temperature to which the suspension is heated up is in the range of from 100 to 120°C. After having obtained the solution it is usually kept at the temperature it was before heated up to or at a slightly higher temperature (+ 5 Kelvin).

Step b)

Preferably this step is performed at a temperature in the range of from 50 to 70°C, more preferably at a temperature in the range of from 64°C to 67°C. Preferably the temperature is lower if a saccharide is present compared to the temperature that is used when no saccharide is present.

Step c)

Preferably this step is performed at a mixing temperature in the range of from 60 to 90°C, more preferably at a mixing temperature in the range of from 65 to 80°C, to obtain a dispersion (preferably an emulsion).

The emulsification can be achieved by using a rotor-stator device or a high pressure homogenizer or both. Other devices known to the person skilled in the art may also be used.

If rotor-stator device and/or a high pressure homogenizer is used, a pressure drop in the range of 100 to 1000 bar, more preferably in the range of 150 to 300 bar, is preferably applied.

Step d)

The organic solvent may e.g. be removed by using a thin film evaporator cascade (preferred). Other methods known to the person skilled in the art are also applicable.

Step e)

The resulting dispersions (preferably the resulting bixin emulsions) after having performed steps a) to d) can be used as such. "Dispersions" hereby encompass suspensions as well as emulsions, whereby emulsions are preferred.

The resulting dispersions can, however, also be dried by any method known to the person skilled in the art, e.g. by spray-drying, spray-drying in combination with fluidised bed granulation or by a powder-catch technique, whereby the sprayed dispersion droplets (preferably the sprayed emulsion droplets) are caught in a bed of an absorbent, such as starch (e.g corn starch), and subsequently dried.

**Edible coatings according to the present invention**

The edible coating according to the present invention can be one being based on sugar but also one being based on sugar-free alternatives.

**Sugar-based edible coatings**

Preferably the sugar in the edible coating is selected from the group consisting of monosaccharides and disaccharides and mixtures thereof.

Preferred examples of mono- and disaccharides are saccharose, glucose, fructose, maltose and mixtures thereof.

The sugar syrup has preferably a Brix value in the range of from 65 to 75, more preferably it has a Brix value in the range of from 70 to 75.

When the edible coating is a hard panned coating, the sugar syrup may also include other components conventionally used in hard panned coatings. Many such components are known in the art and include, but are not limited to, sugar alcohols, high intensity sweeteners, natural polymers, flavors, flavor modifiers, gums, vitamins, minerals, nutraceuticals, or combinations of these. For example, a gum may be included in a sugar syrup to act as a plasticizer in the crystallized sugar coating.

**Sugar-free alternatives**

Sugar-free edible coatings are also part of the present invention. Here polyols such as maltitol, xylitol, mannitol, sorbitol, isomalt, palatinose and mixtures thereof are used instead of sugar.

**Products according to the present invention**

The present invention is directed to the edible coating as described above and claimed in the claims.

Furthermore, the present invention is also directed to a sugar syrup comprising a mixture of bixin and β-carotene (especially a mixture of a water-soluble or water-dispersible β-carotene form and a water-soluble or water-dispersible bixin form with the preferences as given above), wherein the sugar is selected from the group consisting of monosaccharides and disaccharides and mixtures thereof. Preferably the sugar is selected from the group consisting of saccharose (= sucrose), glucose, fructose, maltose and mixtures thereof.

The same preferences as given above for the edible coating such as e.g. kind of bixin form etc. also apply for the sugar syrup.

The present invention is also directed to a sugar-free syrup comprising a mixture of bixin and β-carotene

(especially a mixture of a water-soluble or water-dispersible β-carotene form and a water-soluble or water-dispersible bixin form with the preferences as given above), and a polyol, wherein the polyol is selected from the group consisting of maltitol, xylitol, mannitol, sorbitol, isomalt, palatinose and mixtures thereof.

The same preferences as given above for the edible coating such as e.g. kind of bixin form etc. also apply for the sugar-free syrup.

The invention is also directed to a panned confection comprising:

a) an edible product center as described above, and
b) and edible coating with the preferences as described above.

The same preferences as given above for the edible coating such as e.g. amount of bixin, amount of modified food starch, amount of water-/fat-soluble antioxidant, amount of saccharide etc. also apply for the panned confection.

The same preferences as given above for the edible product center such as type of the edible product center and material of the edible product center etc. also apply for the panned confection.

The present invention also encompasses any combination of any preferred feature of the edible coating as mentioned in this patent application with any preferred feature of the edible product center as mentioned in this patent application though not explicitly mentioned.

Further embodiments of the present invention

The present invention is also directed to the use of a mixture of bixin and β-carotene with all the preferences as given above for coloring edible coatings, sugar syrups or sugar-free syrups with an orange color.

Bixin and β-carotene are especially mixed in form of their water-soluble or water-dispersible forms. Hereby the average particle size of the inner phase of a preferred bixin form when measured in water by Photon Correlation Spectroscopy (Beckman Coulter N4 Plus Submicron Particle Sizer) is preferably in the range of from 100 to 400 nm. Preferably the bixin form upon re-dispersion in water provides a yellow-orange to red-orange color hue at high color strength characterized by an E1/1 value of at least 400, preferably an E1/1 value in the range of from 500 to 1800.

A further embodiment of the present invention is a method for coloring edible coatings, sugar syrups or sugar-free syrups with a mixture of bixin and β-carotene with all the preferences as given above.

**Panning processes according to the present invention and preparation therefor**

Prior to the application of one or more sugar syrup layers, the surface of the edible product center may be prepared according to known techniques in the art such as gumming, isolating, and stabilizing.

For example, in gumming, layers of a high glucose content syrup containing a gum, gelatin, starch, or dextrin may be applied directly to the edible center alternately with a fine crystalline sugar to fill irregularities and smooth ridges. The smoother surface that is obtained may facilitate even coating and adherence of the later applied sugar syrup layers.

Isolating is a process of creating a barrier to lipid, water, or natural sugar migration between the edible center and the sugar syrup layers, and may be effected by applying a film containing gelatin or gum to the center in a process similar to gumming. Stabilizing may be required to strengthen a fragile edible center for subsequent hard pan coating with sugar syrups. A cookie center, for example, may be prevented from crumbling during hard pan coating by first being coated with a melted fat, then isolated with a gum-containing film. Preparation of the surface of the edible core may also be completed with one or more applications of a saccharose sugar syrup.

In some embodiments, sugar syrups may be applied as coating layers directly to the surface of an edible product center. In other embodiments, sugar syrups may be applied as coating layers to a prepared surface of an edible product center, wherein the surface has been prepared according to a known technique including, but not limited to, gumming, isolating, and stabilizing. In still other embodiments, sugar syrups may be applied as coating layers to a crystallized sugar syrup layer overlying any number of coating layers overlying the edible product center. As the phrase that follows in quotation marks is used herein, the application of a sugar syrup as a coating layer "to an edible product center" does not necessarily denote that the sugar syrup is applied directly to the edible product center.

Rather, a sugar syrup that is applied as a coating layer "to an edible product center" may be applied directly to the surface of the edible product center, or to a prepared surface of an edible product center, or to a crystallized sugar syrup layer overlying any number of coating layers overlying the edible product center, within the meaning of the phrase.

In another aspect, the present invention is directed to a method of hard pan coating an edible product center comprising applying a plurality of coating layers to the edible product center, wherein applying comprises applying a coating layer comprising a sugar and the mixture of bixin and β-carotene to the edible product center.

The colored coating layers containing the mixture of bixin and β-carotene may be applied in 10 to 30 colored coating layers. Preferably a minimum of 70 coating layers of sugar syrups and 10 layers of titanium dioxide have been

applied before the colored coating layers containing the mixture of bixin and β-carotene are applied. That means that preferably a total amount of 100 to 150 coating layers is applied.

The desired edible product center is coated with the desired sugar syrups as coating layers, in the desired number of layers for each as described above, and according to processes and techniques generally known in the art. Generally speaking, the process for manufacturing hard panned confections comprises the deposition of a plurality of coating layers of the sugar syrups, by a series of syrup application and drying cycles carried out, for example, in a rotating pan.

Panning and some coating processes are performed in a rotating drum or "pan". Such processes may typically be driven by the equipment utilized to perform them, which are e.g. commercially available from Friedhelm Stechel GmbH (Germany), from Wolf Spezialmaschinen (Germany) and from Driam Anlagenbau Gmbh (Germany), Dumoulin (France).

In a hard panning process, multiple applications of a highly concentrated sugar syrup are used to build up the uncolored portion of a sugar coating on an edible product center. This is followed by multiple applications of a concentrated sugar syrup containing a mixture of bixin and β-carotene with the preferences as given above. The hard panning process comprises the repetitive application of thin layers of a coating solution or composition onto an intermixed mass of centers, while mixing the mass of centers, and the drying of each layer of coating solution or composition during which the sugar in the coating crystallizes between the applications of layers. However, in each process, coating material is built up on the center to form the desired coating.

As the coating is to be colored orange, a mixture of the bixin and the β-carotene is added to the coating solution in the later stages of the coating process. For a hard panned confectionery, following the application of a number of layers of the uncolored sugar syrup to build up the sugar coating, a number of applications of a sugar syrup comprising a mixture of bixin and β-carotene are applied to provide the color coat.

The coating layers of the hard panned confection may be applied to any desired edible product center as described above.

In another aspect, the present invention is directed to a method of soft pan coating an edible product center as described above.

Soft pan coating

Soft pan coating or also called "soft panning" involves applying a syrup to the edible product centers in the same way as for hard panning; however, the soft panning syrup is intended not to crystalize. Therefore, either glucose or a mixture of sucrose and glucose is used as soft panning syrup.

The centers are wetted with the syrup just sufficiently to coat them. Instead of evaporating the water as in hard panning, powdered sugar or caster sugar is added during the tumble which is dissolving in the water of the applied syrup. The amount of sugar that is added needs to be just sufficient to coat the centers but has not to be in excess. Soft panning is carried out without heating and without the use of drying air. Soft panning is a much more rapid process then hard panning and can be applied to a soft center that will be unsuitable for hard panning. Soft panning puts on thicker layers than hard panning and consequently the shape of the centers will be lost. A product that has been soft panned can be finished by dusting with milled sugar followed by a number of hard panned coats. Typical soft panned products are jelly beans and dolly mixture components. Typically 3 to 10 layers are added in soft panning.

Color measurement

Color (lightness, Chroma, and hue) of the hard sugar coated confectionary was determined with a HunterLab Ultra Scan Pro spectrocolorimeter (Hunter Associates Laboratory, Reston, VA,USA) and expressed on basis of the CIELAB colour scale. The mode used was RSIN which stands for Reflectance - Specular Included. The small area view (SAV) with a diameter of 4.826 mm (0.190 inch) was chosen. Color measurements are carried out after CIE guidelines (Commission International d'Eclairage). Values can be expressed as planar coordinates as L*, a*, b* with L* being the measuring values for lightness, with a* being the value on the red-green axes and b* being the value on the yellow-blue axes.

The Chroma (C*) sometimes called saturation describes the vividness or dullness of a color which can be calculated as followed:

$$C^* = \sqrt{(a^{*2} + b^{*2})}$$

The angle called hue (h) describes how we perceive an object's color and can be calculated as followed:

$$h=\tan(b/a)^{(-1)}$$

Instruments settings:

- Color scale is the CIE L*a*b*/L*C*h
- Light source definition: D65 daylight equivalent
- Geometry: Diffuse/8°
- Wavelength: scan 350-1050 nm
- Sample measurement area diameter: 4.826 mm
- Calibration mode: Reflection/ Specular-included

The invention is now further illustrated in the following non-limiting examples.

Examples

Example 1: Manufacture of the bixin form according to the present invention

26 g of crystalline bixin (commercially available as AlcabixP), 2.3 g of dl-alpha-tocopherol and 2.3 g of medium chain triglyceride (commercially available as Bergabest 60/40) were dispersed in 590 g of methylene chloride.

The matrix phase consisted of 361 g of centrifuged modified OSA-starch (HiCap 100), 31 g of glucose syrup (invert sugar), 32.8 g of which were dissolved in 1226 g of water at 52°C.

The suspension was heated up to 103°C to dissolve the whole amount of bixin. Then this solution was held at 102°C in the holding vessel. The emulsification process consists of two steps and is carried out under pressure.

Both phases are continuously fed to a rotor stator device where the solution was emulsified into the matrix phase. The rotation speed was 5000 rpm (revolutions per minute) and the mixing temperature was 106°C. The next step entailed a second micronisation step and consists of a sapphire orifice. The orifice diameter was 200 μm and the applied pressure drop over the orifice was 256 bar at 47°C.

Then the methylene chloride was removed from the emulsion by using a thin film evaporator cascade. The applied evaporation conditions were 93°C at 167 mbar for the first evaporator and 96°C at 123 mbar for the second one. After that the solvent free emulsion was sprayed into a fluidized corn starch bed where the particles were dried.

The final emulsion has a bixin content of 2.2%, E1/1 corr. in $H_2O$ (λmax) = 1774 and a particle size of the inner phase of 123 nm measured by Photon Correlation Spectroscopy (Beckman Coulter N4 Plus Submicron Particle Sizer).

The color intensity E1/1 is the absorbance of a 1% solution and a thickness of 1 cm and is calculated as follows: E1/1 = (Amax-A650)*dilution factor / (weight of sample * content of product form in %).

"(Amax-A650)" means the value you get when you substract the Adsorption value measured at 650 nm ("A650") wavelength from the value ("Amax") that was measured at the maximum Adsorption in the UV-Spectrophotometer.

"*" means "multiplied with".

"dilution factor" = the factor by which the solution has been diluted.

“weight of sample” = the amount/weight of the formulation that was used in [g]

"content of product form in %" = "the amount of bixin in the powder in %" which is 2.2% in the present case.

Example 2: Coating of chocolate lentil cores with a mixture of bixin and β-carotene

A bixin stock solution is prepared by mixing 5 g of the bixin dispersion prepared according to example 1 and 10 g of demineralized water and, thus, dispersing the bixin in water resulting in the so-called "bixin stock solution". A β-carotene stock solution is prepared by mixing 5 g of β-carotene 10% CWS/S and 10 g of demineralized water and, thus, dispersing the β-carotene in water resulting in the so-called "β-carotene stock solution".

The sugar syrup is produced by adding 600 g of sugar, 400 g of water (demineralized) and 10 g of glucose syrup together and heating the mixture up to 105°C which results in a sugar syrup of 72° Brix.

| Ingredients of the sugar syrup | Amount (g) |
|---|---|
| Raw cane sugar | 600 |
| Water (demineralized) | 400 |
| Glucose Syrup | 10 |

1.8 g of this bixin stock solution and 0.6 g of the β-carotene stock solution are mixed with 500 g of the sugar solution (65-75 Brix, preferred 70-75 Brix) at a temperature of 65°C under stirring resulting in a colored syrup.

Chocolate lentils are pre-coated with a pure sugar solution thus providing chocolate lentils with a white center. After this pre-coating a white pigment like titanium dioxide may be added to the sugar syrup and the chocolate lentils may be coated with 10-20 layers of this white sugar syrup before they are coated with the colored layers.

A small amount of colored sugar syrup is added to the chocolate lentils and evenly distributed in a panning drum at a moderate speed. Afterwards the thus colored lentils are dried with cold air (15 -25°C, relative humidity in the range 30-50%) at moderate speed resulting in one layer. These steps are repeated 18 times until the desired color intensity is achieved. The color values of these colored chocolate lentils are then measured.

10 individual lentils are measured and average is calculated. Average value is as follows:

| | |
|---|---|
| L* | 66.93 |
| a* | 37.49 |
| b* | 49.36 |
| C* | 61.99 |
| h | 52.72 |

<u>Example 3: Coating of chocolate lentil cores with a mixture of bixin and β-carotene</u>

A bixin stock solution is prepared by mixing 4 g of the bixin dispersion prepared according to example 1 and 16 g of demineralized water and, thus, dispersing the bixin in water resulting in the so-called "bixin stock solution". A β-carotene stock solution is prepared by mixing 4 g of β-carotene 10% CWS/S and 16 g of demineralized water and, thus, dispersing the β-carotene in water resulting in the so-called "β-carotene stock solution".

The sugar syrup is produced by adding 600 g of sugar, 400 g of water (demineralized) and 10 g of glucose syrup together and heating the mixture up to 105°C which results in a sugar syrup of 72° Brix.

| Ingredients of the sugar syrup | Amount (g) |
|---|---|
| Raw cane sugar | 600 |
| Water (demineralized) | 400 |
| Glucose Syrup | 10 |

3 g of this bixin stock solution and 2.5 g of the β-carotene stock solution are mixed with 500 g of the sugar solution (65-75 Brix, preferred 70-75 Brix) at a temperature of 65°C under stirring resulting in a colored syrup.

Chocolate lentils are pre-coated with a pure sugar solution thus providing chocolate lentils with a white center. After this pre-coating a white pigment like titanium dioxide may be added to the sugar syrup and the chocolate lentils may be coated with 10-20 layers of this white sugar syrup before they are coated with the colored layers.

A small amount of colored sugar syrup is added to the chocolate lentils and evenly distributed in a panning drum at a moderate speed. Afterwards the thus colored lentils are dried with cold air (15 -25°C, relative humidity in the range 30-50%) at moderate speed resulting in one layer. These steps are repeated 18 times until the desired color intensity is achieved. The color values of these colored chocolate lentils are then measured.

10 individual lentils are measured and average is calculated. Average value is as follows:

| | |
|---|---|
| L* | 68.31 |
| a* | 35.46 |
| b* | 42.84 |
| C* | 55.61 |
| h | 50.39 |

Example 4: Coating of chocolate lentil cores with a mixture of bixin and β-carotene

A bixin stock solution is prepared by mixing 3 g of the bixin dispersion prepared according to example 1 and 12 g of demineralized water and, thus, dispersing the bixin in water resulting in the so-called "bixin stock solution". A β-carotene stock solution is prepared by mixing 3 g of β-carotene 3% CWS/M and 27 g of demineralized water and, thus, dispersing the β-carotene in water resulting in the so-called "β-carotene stock solution".

The sugar syrup is produced by adding 600 g of sugar, 400 g of water (demineralized) and 10 g of glucose syrup together and heating the mixture up to 105°C which results in a sugar syrup of 72° Brix.

| Ingredients of the sugar syrup | Amount (g) |
|---|---|
| Raw cane sugar | 600 |
| Water (demineralized) | 400 |
| Glucose Syrup | 10 |

4.3 g of this bixin stock solution and 6 g of the β-carotene stock solution are mixed with 500 g of the sugar solution (65-75 Brix, preferred 70-75 Brix) at a temperature of 65°C under stirring resulting in a colored syrup.

Chocolate lentils are pre-coated with a pure sugar solution thus providing chocolate lentils with a white center. After this pre-coating a white pigment like titanium dioxide may be added to the sugar syrup and the chocolate lentils may be coated with 10-20 layers of this white sugar syrup before they are coated with the colored layers.

A small amount of colored sugar syrup is added to the chocolate lentils and evenly distributed in a panning drum at a moderate speed. Afterwards the thus colored lentils are dried with cold air (15 -25°C, relative humidity in the range 30-50%) at moderate speed resulting in one layer. These steps are repeated 18 times until the desired color intensity is achieved. The color values of these colored chocolate lentils are then measured.

10 individual lentils are measured and average is calculated. Average value is as follows:

| | |
|---|---|
| L* | 64.24 |
| a* | 38.46 |
| b* | 42.57 |
| C* | 57.37 |
| h | 47.9 |

**Claims**

1. An edible coating comprising a mixture of bixin and β-carotene.

2. The edible coating according to claim 1, wherein the bixin is a bixin form, wherein the bixin is microencapsulated.

3. The edible coating according to claim 2, whereby the average particle size of the inner phase of the bixin form when measured in water by Photon Correlation Spectroscopy (Beckman Coulter N4 Plus Submicron Particle Sizer) is in the range of from 100 to 400 nm.

4. The edible coating according to claim 2 and/or 3, whereby in the bixin form the bixin is microencapsulated in a matrix of modified food starch, and wherein the matrix optionally further comprises a saccharide.

5. The edible coating according to any one or more of claims 2 to 4, wherein the bixin form upon re-dispersion in water provides a yellow-orange to red-orange color hue at high color strength **characterized by** an E1/1 value of at least 400, preferably an E1/1 value in the range of from 500 to 1800.

6. The edible coating according to any one or more of claims 1 to 5, wherein the edible coating has a color shade h in the range of from 45 to 55 and preferably also a color value b* in the range of from 40 to 50.

7. A sugar syrup comprising a mixture of bixin and β-carotene.

8. The sugar syrup according to claim 7, wherein the sugar is selected from the group consisting of saccharose, glucose, fructose, maltose and mixtures thereof.

9. A sugar-free syrup comprising a polyol and a mixture of bixin and β-carotene.

10. The sugar-free syrup according to claim 9, wherein the polyol is selected from the group consisting of maltitol, xylitol, mannitol, sorbitol, isomalt, palatinose and mixtures thereof.

11. A panned confection comprising:

a) an edible product center, and
b) an edible coating according to any one or more of claims 1 to 6.

**Patentansprüche**

1. Essbarer Überzug, umfassend eine Mischung aus Bixin und β-Carotin.

2. Essbarer Überzug nach Anspruch 1, wobei das Bixin in einer Bixinform vorliegt, in der das Bixin mikroverkapselt ist.

3. Essbarer Überzug nach Anspruch 2, wobei die durchschnittliche Teilchengröße der inneren Phase der Bixinform, gemessen in Wasser durch Photonenkorrelationsspektroskopie (Beckman Coulter N4 Plus Submicron Particle Sizer), im Bereich von 100 bis 400 nm liegt.

4. Essbarer Überzug nach Anspruch 2 und/oder 3, wobei das Bixin in der Bixinform in einer Matrix von modifizierter Nahrungsmittelstärke mikroverkapselt ist und wobei die Matrix gegebenenfalls weiterhin ein Saccharid umfasst.

5. Essbarer Überzug nach einem oder mehreren der Ansprüche 2 bis 4, wobei die Bixinform beim Redispergieren in Wasser einen gelborangen bis rotorangen Farbton mit hoher Farbstärke, **gekennzeichnet durch** einen E1/1-Wert von mindestens 400, vorzugsweise einen E1/1-Wert im Bereich von 500 bis 1800, liefert.

6. Essbarer Überzug nach einem oder mehreren der Ansprüche 1 bis 5, wobei der essbare Überzug eine Farbschattierung h im Bereich von 45 bis 55 und vorzugsweise außerdem einen Farbwert b* im Bereich von 40 bis 50 aufweist.

7. Zuckersirup, umfassend eine Mischung von Bixin und β-Carotin.

8. Zuckersirup nach Anspruch 7, wobei der Zucker aus der aus Saccharose, Glucose, Fructose, Maltose und Mischungen davon bestehenden Gruppe ausgewählt ist.

9. Zuckerfreier Sirup, umfassend ein Polyol und eine Mischung von Bixin und β-Carotin.

10. Zuckerfreier Sirup nach Anspruch 9, wobei das Polyol aus der aus Maltit, Xylit, Mannit, Sorbit, Isomalt, Palatinose und Mischungen davon bestehenden Gruppe ausgewählt ist.

11. Dragiertes Konfekt, umfassend:

a) eine Füllung aus einem essbaren Produkt und
b) einen essbare Überzug nach einem oder mehreren der Ansprüche 1 bis 6.

## Revendications

1. Enrobage comestible, comprenant un mélange de bixine et de β-carotène.

2. Enrobage comestible selon la revendication 1, dans lequel la bixine est une forme de bixine, où la bixine est microencapsulée.

3. Enrobage comestible selon la revendication 2, dans lequel la taille de particules moyenne de la phase interne de la forme de bixine, lors d'une mesure dans de l'eau par Spectroscopie de Corrélation de Photon (Beckman Coulter N4 plus Analyseur de Particules Submicroniques) se trouve dans la plage allant de 100 à 400 nm.

4. Enrobage comestible selon la revendication 2 et/ou 3, dans lequel, dans la forme de bixine, la bixine est microencapsulée dans une matrice d'amidon alimentaire modifié, et où la matrice comprend en outre éventuellement un saccharide.

5. Enrobage comestible selon l'une ou plusieurs quelconques parmi les revendications 2 à 4, dans lequel la forme de bixine, lors d'une redispersion dans l'eau, apporte une teinte de couleur allant du jaune-orange au rouge-orange selon une intensité de couleur élevée **caractérisée par** une valeur E1/1 d'au moins 400, préférablement une valeur E1/1 dans la plage allant de 500 à 1800.

6. Enrobage comestible selon l'une ou plusieurs quelconques parmi les revendications 1 à 5, dans lequel l'enrobage comestible possède une nuance de couleur h dans la plage allant de 45 à 55 et préférablement de même une valeur de couleur b* dans la plage allant de 40 à 50.

7. Sirop de sucre, comprenant un mélange de bixine et de β-carotène.

8. Sirop de sucre selon la revendication 7, dans lequel le sucre est choisi dans le groupe constitué par le saccharose, le glucose, le fructose, le maltose et des mélanges de ceux-ci.

9. Sirop sans sucre, comprenant un polyol et un mélange de bixine et de β-carotène.

10. Sirop sans sucre selon la revendication 9, dans lequel le polyol est choisi dans le groupe constitué par le maltitol, le xylitol, le mannitol, le sorbitol, l'isomalt, le palatinose et des mélanges de ceux-ci.

11. Confiserie dragéifiée, comprenant :

    a) un centre de produit comestible, et
    b) un enrobage comestible selon l'une ou plusieurs quelconques parmi les revendications 1 à 6.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006066389 A
- US 6500473 B
- GB 1049539 A
- GB 768172 A
- GB 756896 A
- GB 751573 A
- GB 744890 A
- WO 2008110225 A


### Non-patent literature cited in the description


- Modified Starches: Properties and Uses. CRC Press, Inc, 1986